(19)

Europäisches Patentamt

European Patent Office

Office européen des brevets

(11)  **EP 2 176 951 B1**

(12)  **FASCICULE DE BREVET EUROPEEN**

(45) Date de publication et mention
de la délivrance du brevet:
**14.09.2011   Bulletin 2011/37**

(21) Numéro de dépôt: **08806171.8**

(22) Date de dépôt: **04.07.2008**

(51) Int Cl.:
***H03H 17/06*** (2006.01)      ***B60W 40/06*** (2006.01)
***B60W 40/12*** (2006.01)      ***B60W 50/06*** (2006.01)
***B60W 10/02*** (2006.01)

(86) Numéro de dépôt international:
**PCT/FR2008/051254**

(87) Numéro de publication internationale:
**WO 2009/010676 (22.01.2009 Gazette 2009/04)**

(54) **DISPOSITIF D'ASSISTANCE POUR UN VEHICULE**

FAHRZEUGUNTERSTÜTZUNGSVORRICHTUNG

VEHICLE ASSIST DEVICE

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité:  **06.07.2007   FR 0756318**

(43) Date de publication de la demande:
**21.04.2010   Bulletin 2010/16**

(73) Titulaire: **Renault s.a.s.
92100 Boulogne-Billancourt (FR)**

(72) Inventeurs:
• **DESFRICHES, Christophe
F-27120 Pacy-sur-eure (FR)**
• **MONTI, Alessandro
F-92250 La Garenne-colombes (FR)**
• **POTHIN, Richard
F-78760 Jouars-pontchartrain (FR)**

(74) Mandataire: **Alizon, Robert
Renault s.a.s.
TCR GRA 2 36
1, avenue du Golf
F-78288 Guyancourt Cedex (FR)**

(56) Documents cités:
**FR-A- 2 820 450        FR-A- 2 875 201
FR-A- 2 879 526        US-A1- 2004 230 391
US-A1- 2007 156 799**

EP 2 176 951 B1

Printed by Jouve, 75001 PARIS (FR)

**Description**

La présente invention concerne un dispositif d'assistance au contrôle pour un véhicule à boîte de vitesse manuelle ou automatique, mettant en oeuvre un algorithme d'apprentissage de la courbe d'embrayage.

L'invention concerne en particulier les dispositifs et procédés d'assistance aux manoeuvres en côte, mais peut également être appliquée à l'estimation de l'usure de l'embrayage d'un véhicule, ou encore au contrôle d'un système de commande électronique de la trajectoire (plus connu sous le nom de Electronic Traction Control, ETC) d'un véhicule 4x4.

Sur certains véhicules, les constructeurs automobiles proposent un Frein de Stationnement Assisté.

Ce Frein de Stationnement Assisté doit apporter une prestation valorisable par le client, en raison de son coût relativement élevé par rapport à la solution du Frein de Stationnement traditionnel.

Pour valoriser ce système, des constructeurs ont donc décidé d'y associer une fonction d'assistance aux manoeuvres en côte, et notamment d'assistance au démarrage en côte (ou décollage), dont le principe est de relâcher les freins sur les roues non motrices dès que le couple transmis par le moteur aux roues motrices est suffisant pour compenser l'effet de l'inclinaison de la pente.

On connaît déjà de tels dispositifs.

Le document GB 2 376 990 propose dans cette optique un module de commande d'un dispositif de Frein de Stationnement Assisté pour un véhicule automobile comportant une boîte de vitesse manuelle, qui relâche la force exercée sur le frein de stationnement lorsqu'il reçoit des signaux lui indiquant, d'une part, un déplacement positif de la pédale d'accélérateur, et d'autre part, que la position de la pédale d'embrayage a atteint son point de léchage. L'instant où le dispositif relâche le frein dépend également de la vitesse d'enfoncement de la pédale d'embrayage, du rapport de vitesses engagé et de la pente dans laquelle se trouve l'usager du véhicule.

Ce dispositif a l'inconvénient d'être sensible aux bruits des capteurs, tels que le capteur de pente. Par ailleurs, il ne tient compte que du point de léchage sur la courbe d'embrayage. Il ne permet donc pas un décollage optimal en forte pente.

Enfin, un autre inconvénient de ce procédé est qu'il se fonde sur un calcul du couple transmis par l'embrayage correspondant au point de léchage à partir d'une estimation du couple moteur. Il ne prend donc pas en compte le vieillissement de l'embrayage, et est sensible aux consommateurs en ligne, tels que la climatisation, l'alternateur ou tout autre appareil consommant une partie de l'énergie venant du moteur.

Le document FR 2 828 450 qui divulgue le préambule de la revendication 1 propose quant à lui un procédé d'assistance au démarrage en côte exploitant les caractéristiques de l'embrayage du véhicule, au moyen d'un algorithme qui permet d'estimer le couple transmis à cet embrayage, afin de contrôler de manière plus précise le desserrage des freins lors du décollage.

Cette estimation est réalisée en traçant une courbe d'embrayage, qui donne la position de la pédale d'embrayage et le couple maximal transmissible par l'embrayage correspondant. Elle est cependant très sensible à l'initialisation de ladite courbe ainsi qu'au bruit des capteurs. Par ailleurs, la mise à jour de la courbe est lente, et inadaptée à son degré de fiabilité.

US 2004/0230391 A divulgue des filtres avec réponse finie aux impulsions.

Un objectif de l'invention est de pallier ces inconvénients de la technique antérieure, en proposant un dispositif d'assistance, notamment aux manoeuvres en côte, qui soit peu sensible au vieillissement et à l'usure de l'embrayage.

Un autre objet de l'invention est de proposer un dispositif d'assistance, notamment aux manoeuvres en côte, qui apprenne plus rapidement la courbe d'embrayage.

Enfin, un autre objet de l'invention est de proposer un dispositif d'assistance, notamment aux manoeuvres en côte, paramétrant la mise à jour de la courbe d'embrayage en fonction de la fiabilité accordée à la courbe d'embrayage enregistrée.

Pour cela, l'invention propose un dispositif d'assistance pour un véhicule comportant un groupe motopropulseur connecté aux roues motrices au moyen d'un embrayage, un bus et un Frein de Stationnement Assisté, le dispositif comprenant des capteurs qui envoient des signaux au bus et des moyens pour estimer, par apprentissage à partir desdits signaux, une courbe d'embrayage, ladite courbe reliant la position de la pédale d'embrayage et une plage de couple maximal transmissible par l'embrayage correspondant, caractérisé en ce qu'il comprend en outre des moyens pour mettre en phase les signaux délivrés afin de diminuer l'influence du bruit des capteurs associés auxdits signaux.

Certains aspects préférés mais non limitatifs du dispositif selon l'invention sont les suivants :

- lesdits moyens sont des filtres qui introduisent des retards dans les signaux,
- lesdits moyens sont des filtres FIR (pour Finite Impulse Response, Réponse Finie aux Impulsions),
- il comprend en outre des moyens qui introduisent des retards constants dans les signaux,
- il comprend en outre des moyens qui introduisent des retards variables dans les signaux,
- il comprend en outre des moyens pour enregistrer, suite à des changements de rapport ascendants et/ou descendants effectués sur le véhicule, des points, relatifs à la position de la pédale d'embrayage, la vitesse de rotation du moteur, la vitesse de rotation des roues et au couple transmis par l'embrayage, afin d'estimer la courbe d'embrayage par discrétisation, et des moyens pour effectuer une moyenne desdits points enregistrés pendant un nombre déterminé de changements de rapport ascendants et/ou descendants, et ce pour chaque plage de couple,

- il comprend en outre :

  o des moyens pour déterminer si une vitesse est engagée, suite à un changement de rapport de vitesse,
  o des moyens pour commander une mesure de points,
  o des moyens pour analyser chaque point, et déterminer s'il satisfait les conditions suivantes :

    ■ le point appartient à une plage de couple,
    ■ le glissement entre l'embrayage et le volant d'inertie est supérieur à un seuil de glissement donné,
    ■ l'écart entre la courbe d'embrayage à mettre à jour et le point doit être inférieur à un seuil donné,

  o des moyens pour, le cas échéant, déterminer si le point correspondant doit être rejeté ou enregistré,

- il comprend en outre des moyens pour mettre à jour la courbe d'embrayage en fonction de la fiabilité de l'estimation, ladite fiabilité étant moins importante en début d'utilisation du véhicule, et croissant avec l'usage dudit véhicule.

D'autres caractéristiques, buts et avantages de la présente invention apparaîtront à la lecture de la description détaillée qui va suivre, au regard des dessins annexés, donnés à titre d'exemples non limitatifs et sur lesquels :

- La figure 1 présente l'architecture fonctionnelle d'un véhicule équipé du dispositif selon l'invention,
- La figure 2 illustre le principe de fonctionnement de l'automate qui estime le couple transmis aux roues d'un véhicule mis en oeuvre dans l'invention,
- La figure 3 présente une discrétisation de la courbe d'embrayage selon l'invention.

Un véhicule équipé d'un dispositif d'assistance au démarrage en côte selon l'invention comprend un groupe motopropulseur, un Frein de Stationnement Assisté 5, un bus 4, sur lequel transitent des signaux provenant du reste du véhicule 6, et un calculateur de contrôle du groupe motopropulseur.

Le bus 4 est de préférence un bus de la norme CAN™ (Control Area Network, pour réseau de zone de commande).

Le groupe motopropulseur est composé d'un moteur thermique couplé à des roues motrices par un dispositif de transmission comportant une boîte de vitesse et un embrayage, commandés par l'usager ou un calculateur, selon le type de boîte de vitesse.

En variante, le groupe motopropulseur peut comporter une ou plusieurs machines électriques, avec ou sans moteur thermique.

Le dispositif d'assistance au démarrage en côte coopère avec un calculateur 1 de contrôle du Frein de Stationnement Assisté 5, qui est également connecté au bus 4.

Le calculateur 1 est équipé, ainsi qu'il est connu, d'un moyen pour produire des ordres de serrage et de desserrage du Frein de Stationnement Assisté 5, lesdits ordres 5 étant générés sur une ligne de connexion au Frein de Stationnement Assisté 5 proprement dit. Le cas échéant, le calculateur 1 est également équipé d'un moyen pour transmettre au bus 4 des informations d'état du Frein de Stationnement Assisté 5.

Le calculateur 1 de contrôle du Frein de Stationnement Assisté 5 est connecté par une ligne convenable à un capteur de pente 2.

Lorsque le véhicule se trouve arrêté dans une pente, le capteur de pente 2 délivre un signal représentatif de l'inclinaison de la pente dans laquelle est arrêté le véhicule.

Lorsque le calculateur 1 de contrôle du Frein de Stationnement Assisté 5 produit un ordre de serrage, les parties mobiles des freins viennent serrer les disques de sorte que le Frein de Stationnement Assisté 5 soit serré.

Inversement, lorsque le calculateur 1 de contrôle du Frein de Stationnement Assisté 5 produit un ordre de desserrage du Frein de Stationnement Assisté 5, les parties mobiles des freins sont relâchées.

Par ailleurs, en situation de démarrage (quelle que soit l'inclinaison de la pente), le groupe motopropulseur du véhicule produit un couple qui est ou non transmis aux roues, selon que l'embrayage est actif ou non, et selon une fraction qui dépend de la position de l'embrayage.

Ainsi, le dispositif de l'invention détermine une condition de desserrage du Frein de Stationnement Assisté 5, fonction notamment de l'inclinaison de la pente et de l'estimation du couple ECT transmis à l'embrayage. Cette condition est déterminée de sorte que le véhicule se trouve en situation de décollage dès qu'un certain seuil est dépassé, où l'effet de pente est équilibré par le couple moteur.

Pour décoller, un véhicule stationné dans une pente doit vaincre l'effet de pente, dû à la force d'attraction de la terre.

Cet effet est fonction de l'inclinaison de la pente et de la masse du véhicule, et vaut

$$m.g.sin(\theta_{pente}) \qquad \text{(Equation 1)}$$

où

- $m$ est la masse du véhicule,
- $g$ est la gravité,
- $\theta_{pente}$ est l'inclinaison de la pente.

Le couple minimum $C_{T\_seuil}$ qu'il faut transmettre à l'embrayage, par l'intermédiaire de la chaîne cinématique de la roue, pour permettre au véhicule de décoller (c'est-à-dire de démarrer dans la pente), doit donc être au moins égal à

$$C_{T\_seuil} = ECT(\theta_{emb\_seuil}) = m.g.sin(\theta_{pente}).r(b).\rho_{roues} \qquad \text{(Equation 2)}$$

où

- $r(b)$ est le rapport de boîte engagé, correspondant à la position b du levier de vitesse,
- $ECT(\theta_{emb\_seuil})$ est le couple transmis par l'embrayage lorsque la pédale est enfoncée jusqu'à la position $6_{emb\_seuil}$,
- $\rho_{roues}$ est le rayon sous charge des roues du véhicule.

Le couple $C_{T\_seuil}$ est en fait le couple seuil de décollage.

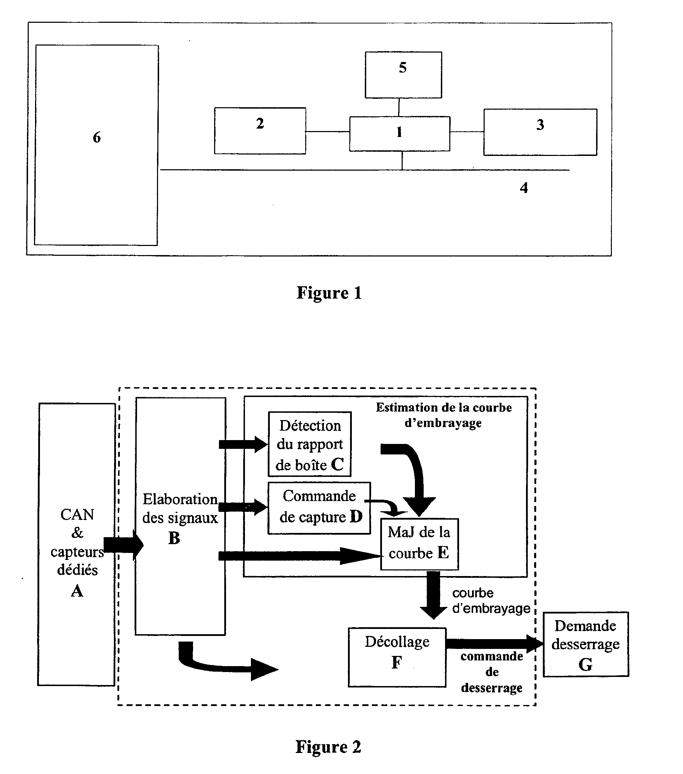

La stratégie que propose l'invention est fondée sur l'amélioration de l'algorithme présenté par la demande FR 2 828 450, qui propose un dispositif permettant d'estimer la courbe d'embrayage (qui, rappelons-le, relie la position de la pédale d'embrayage au couple maximal appliqué par l'embrayage), de sorte que le dispositif soit moins sensible à l'usure et au vieillissement de l'embrayage ainsi qu'aux consommateurs en ligne que les procédés se fondant sur son calcul. Cet algorithme est illustré sur la figure 2 annexée et ne sera pas davantage décrit. Le procédé associé commande le relâchement du Frein de Stationnement Assisté lorsque le couple transmis à l'embrayage ECT est supérieur au couple de décollage $C_{T-seuil}$ donné par l'équation 2.

La difficulté consiste à estimer le plus précisément possible le couple transmis à l'embrayage.

Pour cela, l'algorithme et le procédé proposés par notre invention améliorent les blocs B et E de la figure 2, à savoir les blocs d'élaboration des signaux d'entrée et de mise à jour de la courbe d'embrayage.

On définit sur la courbe d'embrayage le point de léchage comme correspondant à la position de la pédale pour laquelle l'embrayage commence à transmettre un couple. Ce couple minimum peut par exemple être de l'ordre de 3N.m.

Le point de léchage correspond donc à une position de la pédale d'embrayage pour laquelle l'embrayage est en phase de glissement.

Cette caractéristique évolue avec le temps, en fonction de l'usure de la garniture du plateau de friction de l'embrayage et du volant d'inertie du véhicule, du changement de la raideur des ressorts qui appliquent une pression sur l'embrayage suite à leur utilisation répétée, etc.

Le couple transmis par l'embrayage est donc déterminé à partir de la connaissance a priori de la courbe d'embrayage. Pour cela, on doit déterminer la position de la pédale d'embrayage pour laquelle on transmet le couple seuil de décollage $C_{T\_seuil}$, en résolvant l'équation 2. On en déduit alors la position $\theta_{emb\_seuil}$ que doit prendre la pédale d'embrayage afin d'effectuer un démarrage en côte de qualité.

La courbe d'embrayage étant sensible à l'usure et au vieillissement de l'embrayage, il faut la recaler tout au long de la vie du véhicule.

Dans la suite de la description et sur les figures annexées, nous utiliserons les notations suivantes pour identifier les variables mathématiques entrant en jeu dans l'invention :

- $C_{m\_CME}$ est le couple moyen effectif délivré par le moteur, estimé par l'e calculateur moteur,
- $\omega_m$ est la vitesse angulaire de rotation du moteur,
- $\omega_R$ est la vitesse angulaire de rotation des roues avant,
- $v$ est la vitesse longitudinale du véhicule,
- $\theta_{emb}$ est la position de la pédale d'embrayage,

- $\theta_{acc}$ est la position de la pédale d'accélérateur,
- $\theta_{pente}$ est l'inclinaison du véhicule,
- RE est le rapport de vitesse engagé. RE = 0 au point mort, et RE = 1 quelle que soit la vitesse engagée, excepté pour la marche arrière, pour laquelle RE = -1,
- $\dot{x}$ est la dérivée de la variable x par rapport au temps.

Selon l'invention, la courbe d'embrayage est estimée à partir de points acquis lors des phases de changement de rapport de vitesse du véhicule, de préférence au cours des changements de rapport descendants. En effet, lors des changements de rapport descendants, le calculateur moteur du véhicule délivre une meilleure estimation du couple moteur $C_{M\_CME}$, puisqu'il ne doit tenir compte que de l'effet dû à la descente des pistons lorsque ceux-ci sont en phase d'aspiration d'air, tandis que lors de changements de rapport ascendants, le calculateur moteur doit tenir compte de la température de combustion du mélange, de la quantité d'essence effectivement injectée, etc. ce qui rend beaucoup plus complexe et moins sûre l'estimation du couple moteur $C_{m\_CME}$.

Amélioration du bloc d'élaboration des signaux délivrés par les capteurs du véhicule :

Les équations de la dynamique sur lesquelles est basé le procédé de l'invention sont :

$$m\dot{v} = F_X - F_{res}$$
$$J_R \cdot \dot{\omega}_R = C_R(\theta_{emb}, \omega_m - \omega_R) - \rho_{roues} \cdot F_X \qquad \text{EQUATION 3}$$
$$J_m \cdot \dot{\omega}_m = C_{m\_CME}(\omega_m, \theta_{acc}) - r(b) \cdot C_R(\theta_{emb}, \omega_m - \omega_R)$$

C'est-à-dire :

$$F_X = m \cdot \dot{v} + F_{res}$$
$$C_R(\theta_{emb}, \omega_m - \omega_R) = J_R \cdot \dot{\omega}_R - \rho_{roues} \cdot F_X \qquad \text{EQUATION 4}$$
$$C_{m\_CME}(\omega_m, \theta_{acc}) = J_m \cdot \dot{\omega}_m + r(b) \cdot C_R(\theta_{emb}, \omega_m - \omega_R)$$

où

- $r(b).C_R(\theta_{pente}, \omega_m-\omega_R)$ est le couple transmis par l'embrayage à la position $\theta_{emb}$, que l'on notera $ECT(\theta_{emb})$
- $F_x$ est la composante longitudinale de la force de contact entre la roue du véhicule et le sol,
- $F_{res}$ est la composante longitudinale de la résistance au mouvement du véhicule.

Lorsque le glissement est suffisant, on peut utiliser l'équation 4 afin d'estimer la courbe d'embrayage. On obtient alors les équations :

$$ECT(\theta_{emb}) = Cm_{CME} - J_m\dot{\omega}_m$$
$$\omega_R - r(b) \cdot \omega_m > \Delta\omega_{seuil} \qquad \text{EQUATION 5}$$

La seconde équation est une condition sur le glissement. Elle exprime que la différence entre la vitesse angulaire des roues $\omega_R$ et la vitesse angulaire de l'embrayage $r(b).\omega_m$ doit être supérieure à une vitesse angulaire seuil $\Delta\omega_{seuil}$, afin de garantir que le couple transmis par l'embrayage soit le couple maximal transmissible par l'embrayage à la position $\theta_{emb}$ considérée.

Pour estimer la courbe d'embrayage, comme peut le montrer l'équation 5, il faut que les variables $C_{m\_CME}$, $\theta_{emb}$, $\omega_m$, $\omega_R$ et $\dot{\omega}_m$ soient en phase.

On applique donc des filtrages, et/ou des dérivations et/ou des retards aux signaux reçus en entrée du bloc B, lesdits signaux provenant des différents capteurs du véhicule par l'intermédiaire du bus CAN, afin que les signaux en sortie du bloc B soient en phase.

Les capteurs peuvent par exemple être un capteur de pente, un capteur d'embrayage, un capteur de vitesse de rotation angulaire du moteur, etc.

Pour cela, le dispositif de la demande met en oeuvre des filtres FIR (pour Finite Impulse Response, Réponse finie aux impulsions). Lorsqu'il reçoit un signal d'entrée venant d'un capteur, il introduit un retard dans ledit signal, dont le rôle est de réduire le bruit du capteur correspondant, de manière connue en soi. Le signal de sortie y(t) d'un filtre FIR pour un signal d'entrée x(t) est donc :

$$y(t) = \sum_{i=1}^{N} a_i \cdot x(t - i \cdot T) \qquad \textbf{EQUATION 6}$$

où

- $a_i$ est le $i^{ème}$ coefficient du filtre FIR,
- $N$ est le nombre total de coefficients du filtre FIR,
- $x(t\text{-}i\ T)$ est le signal d'entrée du filtre retardé de iT secondes.

Le dispositif selon l'invention peut en outre comporter des filtres de dérivation sur m échantillons, qui introduisent un retard également connu en soi (du type m/2).

Par exemple, de tels filtres peuvent être réalisés selon l'équation suivante :

$$y(t) = \frac{\sum_{k=1}^{m} x(k) - x(k - m)}{m \cdot Ts} \qquad \textbf{EQUATION 7}$$

où • $Ts$ est le temps d'échantillonnage.

On peut également introduire des retards constants, afin de pallier les retards dus par exemple aux opérations de filtrage, de dérivation (notamment au cours de l'opération selon laquelle on dérive $\omega_m$ afin d'obtenir $\dot{\omega}m$) ou à des pas d'échantillonnage différents sur le bus CAN. On exprime alors le signal de sortie y(t) comme ayant un retard constant par rapport à un signal d'entrée x(t) tel que

$$y(t) = x(t - T) \qquad \textbf{EQUATION 8}$$

où • $x(t\text{-}T)$ est le signal d'entrée retardé de T secondes

Enfin, des retards variables peuvent être introduits, ces retards étant liés aux caractéristiques de certains capteurs.

Par exemple, le capteur de vitesse du moteur délivre une information sur la vitesse de rotation du moteur en tours par minute : selon la vitesse de rotation du moteur, l'information est donc délivrée plus ou moins fréquemment, puisqu'elle est obtenue au moment où le moteur effectue un tour complet. Ainsi, les autres signaux, tels que l'estimation du couple moteur $C_{m\_CME}$, doivent être mis en phase avec l'instant de délivrance de ce signal moteur $\omega_m$. On exprime alors le signal de sortie y(t) comme ayant un retard variable par rapport à un signal d'entrée x(t) tel que :

$$y(t) = \begin{cases} x(t) & si & \omega_m^{0} \leq \omega_m(t) < \omega_m^{1} \\ x(t - T) & si & \omega_m^{1} \leq \omega_m(t) < \omega_m^{2} \\ ... & si & ... \\ x(t - (i - 1) \cdot T) & si & \omega_m^{i-1} \leq \omega_m(t) < \omega_m^{i} \\ x(t - i \cdot T) & si & \omega_m(t) \geq \omega_m^{i} \end{cases} \qquad \textbf{EQUATION 9}$$

où • $\omega_m^{i}$ est le $i^{ème}$ seuil de vitesse angulaire du moteur du moteur,

- $x(t\text{-}iT)$ est le signal d'entrée retardé de i.T secondes

L'utilisation de ces filtres sur les signaux d'entrée permet donc d'augmenter la robustesse aux bruits des capteurs de l'algorithme utilisé par le dispositif de la demande, en tenant compte des retards dus à l'utilisation de certains paramètres lors de l'estimation de la courbe d'embrayage.

Amélioration de la mise à jour de la courbe d'embrayage

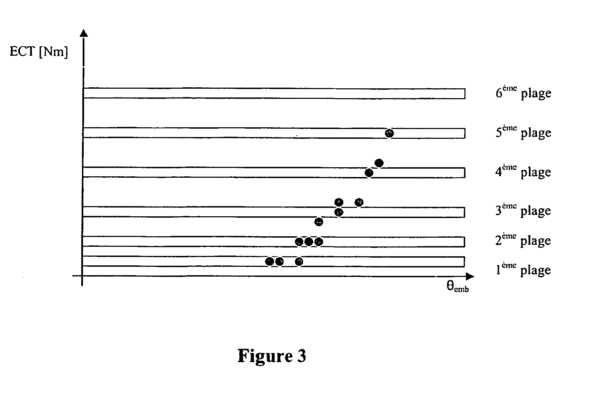

Afin d'obtenir la courbe d'embrayage, des points $CC(\theta_{emb\_CC}, ECT_{cc})$ liant la position de la pédale d'embrayage $6_{emb}$ et le couple maximal transmissible par l'embrayage ECT sont mesurés puis enregistrés. La courbe d'embrayage est alors discrétisée en $N_{plages}$ plages de couple ECT, comme illustré sur la figure 3 annexée, chaque plage i ($1 \le i \le N_{plages}$) étant associée à un point $CC_i(\theta_{emb-cc}(i), ECT_{cc}(i))$.

De préférence, les plages i ($1 \le i \le N_{plages}$) sont des intervalles réguliers, encadrés par les couples transmis par l'embrayage $ECT_{Min}(i)$ et $ECT_{Max}(i)$, avec $ECT_{Max}(i) = ECT_{Min}(i+1)$ (pour $1 \le i \le N_{Plages} - 1$).

Toute autre discrétisation peut être envisagée, voir par exemple la figure 3. Néanmoins, une discrétisation plus fine pour les petites valeurs de ECT est préférable afin d'avoir une courbe d'embrayage plus précise aux alentours du point de léchage.

De préférence, les signaux pris en compte pour l'élaboration de la courbe d'embrayage sont les signaux obtenus en sortie du bloc B, à savoir des signaux filtrés pour les rendre robustes aux bruits des capteurs, et/ou retardés afin de les mettre en phase.

L'algorithme et le procédé selon l'invention suivent les étapes suivantes :

Au cours d'une première étape, si un changement de rapport de vitesse est détecté, une commande de mémorisation de points ($\tilde{\theta}_{emb}$, $\widetilde{ECT}$, $\tilde{\omega}_R$, $\tilde{\omega}_m$) est générée, afin que les informations de position de pédale d'embrayage $\theta_{emb}$, de vitesse de rotation du moteur $\omega_m$, de vitesse de rotation des roues $\omega_R$ et de couple transmis par l'embrayage ECT soient mises en mémoire dans un moyen d'enregistrement. Lors d'un rétrogradage, une multitude de points ($\tilde{\theta}_{emb}$, $\widetilde{ECT}$, $\tilde{\omega}_R$, $\tilde{\omega}_m$) est ainsi capturée.

Au cours d'une deuxième étape, le procédé détermine si un rapport de vitesse a été engagé, et le cas échéant, si le changement de rapport est descendant. Si cette condition n'est pas remplie, le procédé ne tient pas compte des points capturés et le rejette. Sinon, il passe à une troisième étape au cours de laquelle il analyse les points capturés.

Bien entendu, comme nous l'avons vu plus haut, la condition de rétrogradage est une restriction qui n'est choisie que pour augmenter la robustesse de l'algorithme associé au procédé. Si l'estimation du couple moteur est jugée suffisamment fiable, cette restriction peut être annulée, de manière à prendre également en compte les points mémorisés lors d'un changement de vitesse montant.

Lors de l'analyse des points capturés ($\tilde{\theta}_{emb}$, $\widetilde{ECT}$, $\tilde{\omega}_R$, $\tilde{\omega}_m$), au cours de la troisième étape, le procédé établit, pour chacun d'entre eux, s'il appartient à une plage i de la courbe d'embrayage. Le cas échéant, le point est alors mis en mémoire. Sinon, le point est rejeté.

En notant :

- $\tilde{x}$ l'information capturée pour la variable x,
- $\bar{\tilde{x}}$ la moyenne effectuée sur la variable x,
- $\widetilde{P}_{i,j}(\tilde{\theta}_{emb}(i), \widetilde{ECT}(i))$ le $j^{ème}$ point capturé au cours d'un ré-embrayage dans la $i^{ème}$ plage de la courbe d'embrayage, les conditions que doit satisfaire un tel point ($\tilde{\theta}_{emb}$, $\widetilde{ECT}$, $\tilde{\omega}_R$, $\tilde{\omega}_m$) pour être mis en mémoire par le dispositif sont les suivantes :

- le point doit appartenir à la plage i : $ECT_{Min}(i) < \widetilde{ECT} < ECT_{Max}(i)$
- le glissement doit être supérieur à un seuil donné $\Delta\omega_{seuil}$ : $\Delta\omega = \tilde{\omega}_R - \tilde{\omega}_m \cdot r(b) > \Delta\omega_{seuil}$
- l'écart entre le point capturé et le point de la courbe d'embrayage à mettre à jour dans la plage i ($\theta_{emb\_cc}(i)$) doit être faible, par exemple inférieur à un seuil $\Delta\theta_{emb}$ : $|\tilde{\theta}_{emb} - \theta_{emb\_cc}(i)| < \Delta\theta_{emb}$.

Au cours d'une quatrième étape, exécutée tous les $n_{re\_emb}$ rétrogradages, on moyenne les $n_i$ points d'une plage i acquis et mis en mémoire, pour chaque plage (c'est-à-dire pour i compris entre 1 et $N_{plages}$), afin de filtrer les erreurs dues à la modélisation et à la capture des mesures :

$$\overline{P}_i = \frac{\sum_j \tilde{P}_{i.j}}{n_i}$$

où • $\overline{P}_i = \overline{P}_i(\overline{\theta}_{emb}(i), E\overline{C}T(i))$ est la moyenne des points capturés dans la i$^{eme}$ plage de la courbe d'embrayage.

Ainsi, la courbe d'embrayage est-elle déterminée suite à la capture et au moyennage d'un ensemble de points obtenus au cours d'un nombre $n_{re\text{-}emb}$ de rétrogradages (voire au cours d'un nombre $n_{re\text{-}emb}$ de changements de rapport ascendants et/ou descendants).

Les trois premières étapes sont exécutées à tous les rétrogradages (voire à tous les changements de rapport ascendants et/ou descendants), tandis que la quatrième et la cinquième étape (voir ci-après) ne sont exécutées que tous les $n_{re\_emb}$ rétrogradages (voire tous les $n_{re\_emb}$ changements de vitesse ascendants et/ou descendants)

Par ailleurs, le nombre de rétrogradages $n_{re\text{-}emb}$ pris en compte ainsi que l'erreur $\Delta\theta_{emb}$ entre le point capturé $\tilde{\theta}_{emb}$ et le point $\theta_{emb}$ de la courbe d'embrayage peut varier en fonction de la fiabilité de la courbe d'embrayage. Ainsi, pour augmenter la robustesse de l'algorithme et le procédé selon l'invention, peut-on faire varier ces deux paramètres au cours de la vie du véhicule (et de son usage).

Par exemple, au début de la vie du véhicule lorsque le véhicule a été peu utilisé, où la courbe d'embrayage est moins fiable, à savoir lors des premiers rétrogradages effectués sur le véhicule ou lors des premiers kilomètres parcourus par le véhicule, on peut fixer la valeur du nombre de rétrogradages $n_{re\text{-}emb}$ pris en compte dans le moyennage et la valeur du seuil d'erreur $\Delta\theta_{emb}$, pour une plage i donnée, à une valeur élevée, de sorte que tous les points capturés soient acceptés et que l'erreur due aux mesures et à la modélisation soit finement filtrée au cours du procédé. Ce paramétrage permet ainsi d'améliorer sensiblement l'initialisation de la courbe d'embrayage.

Par la suite, au cours de l'utilisation du véhicule, on peut alors réduire la valeur attribuée à ces deux paramètres, puisque la courbe d'embrayage obtenue et mise en mémoire selon l'invention tend à converger vers la courbe d'embrayage réelle.

Enfin, au cours d'une cinquième étape, le procédé détermine la mise à jour de la courbe d'embrayage qui, de préférence, est réalisée au moyen d'un filtre passe-bas du premier ordre, appliqué à chacune des plages de couple ($1 \le i \le N_{plages}$) tous les $n_{re\text{-}emb}$ rétrogradages :

$$CC_i(k) = \alpha_{emb\_courbe} \cdot CC_i(k-1) + (1 - \alpha_{emb\_courbe}) \cdot \overline{P}_i(k) \qquad \text{EQUATION 10}$$

où • $\alpha_{emb\_courbe}$ est un facteur de fiabilité, • $k$ indique le pas de calcul (tous les $n_{re\text{-}emb}$ rétrogradages).

Ainsi, $CC_i(k)$ est le point de la courbe d'embrayage dans la plage de couple i, au pas de calcul k (c'est-à-dire après $k*n_{re\text{-}emb}$ rétrogradages).

$CC_i(k-1)$ est le point de la courbe d'embrayage dans la plage de couple i, au pas de calcul (k-1) (c'est-à-dire après $(k-1)*n_{re\text{-}emb}$ rétrogradages).

$\overline{P}_i(k)$ est la moyenne des points capturés entre les $k*n_{re\text{-}emb}$ rétrogradages et les $(k-1)*n_{re\text{-}emb}$ rétrogradages.

On attribue une valeur comprise entre 0 et 1 au coefficient de fiabilité $\alpha_{emb\_courbe}$ en fonction de la fiabilité de la courbe d'embrayage.

Ainsi, pour une courbe fiable, le coefficient de fiabilité $\alpha_{emb\_courbe}$ sera plus proche de 1 que pour une courbe d'embrayage peu fiable, pour laquelle le coefficient de fiabilité sera proche de zéro.

Ce paramètre $\alpha_{emb\_courbe}$ est par ailleurs paramétrable, et peut, tout comme la valeur du nombre de ré-embrayages $n_{re\text{-}emb}$ pris en compte dans le moyennage et la valeur du seuil d'erreur $\Delta\theta_{emb}$, varier au cours de la vie du véhicule afin que la courbe obtenue par l'algorithme selon l'invention converge plus rapidement vers la courbe d'embrayage réelle.

Par exemple, lors des premiers rétrogradages ou lors des premiers kilomètres parcourus par le véhicule, la valeur de $\alpha_{emb\_courbe}$ peut être choisie faible (proche de zéro) puis augmentée progressivement par la suite. Le poids du point dernièrement enregistré $CC_i(k\text{-}1)$ sera donc moins important par rapport au poids du point moyenne $\overline{P}_i(k)$ pour la valeur attribuée au point $CC_i(k)$.

On garantit ainsi la mise à jour et l'apprentissage de la courbe d'embrayage du véhicule en temps réel, tout au long de sa vie.

**Revendications**

1. Dispositif d'assistance pour un véhicule comportant un groupe motopropulseur connecté aux roues motrices au moyen d'un embrayage, un bus (4) et un Frein de Stationnement Assisté (5), le dispositif comprenant des capteurs qui envoient des signaux au bus et des moyens pour estimer, par apprentissage à partir desdits signaux, une courbe d'embrayage, ladite courbe reliant la position de la pédale d'embrayage et une plage de couple maximal transmissible par l'embrayage correspondant,
   **caractérisé en ce qu'**il comprend en outre des moyens pour mettre en phase les signaux délivrés afin de diminuer l'influence du bruit des capteurs associés auxdits signaux.

2. Dispositif d'assistance selon la revendication précédente, **caractérisé en ce que** lesdits moyens sont des filtres qui introduisent des retards dans les signaux.

3. Dispositif d'assistance selon l'une des revendications précédentes, **caractérisé en ce que** lesdits moyens sont des filtres à réponse finie aux impulsions (FIR).

4. Dispositif d'assistance selon l'une des revendications précédentes, **caractérisé en ce qu'**il comprend en outre des moyens qui introduisent des retards constants dans les signaux.

5. Dispositif d'assistance selon l'une des revendications précédentes, **caractérisé en ce qu'**il comprend en outre des moyens qui introduisent des retards variables dans les signaux.

6. Dispositif d'assistance selon l'une des revendications précédentes, **caractérisé en ce qu'**il comprend en outre des moyens pour enregistrer, suite à des changements de rapport ascendants et/ou descendants effectués sur le véhicule, des points ($\tilde{\theta}_{emb}$, $\widetilde{ECT}$, $\tilde{\omega}_R$, $\tilde{\omega}_m$), relatifs à la position de la pédale d'embrayage ($\theta_{emb}$), la vitesse de rotation du moteur ($\omega_m$), la vitesse de rotation des roues ($\omega_R$) et au couple transmis par l'embrayage (ECT), afin d'estimer la courbe d'embrayage par discrétisation, et des moyens pour effectuer une moyenne desdits points enregistrés pendant un nombre déterminé de changements de rapport ascendants et/ou descendants ($n_{emb\_courbe}$), et ce pour chaque plage de couple.

7. Dispositif selon la revendication précédente, **caractérisé en ce qu'**il comprend en outre :

   - des moyens pour déterminer si une vitesse est engagée, suite à un changement de rapport de vitesse,
   - des moyens pour commander une mesure de points ($\tilde{\theta}_{emb}$, $\widetilde{ECT}$, $\tilde{\omega}_R$, $\tilde{\omega}_m$),
   - des moyens pour analyser chaque point, et déterminer s'il satisfait les conditions suivantes :

      i. le point appartient à une plage de couple ($ECT_{Min}$ (i) < $\widetilde{ECT}$ < $ECT_{Max}$ (i)),
      ii. le glissement entre l'embrayage et le volant d'inertie est supérieur à un seuil de glissement ($\Delta\omega_{seuil}$) donné ($\Delta\omega = \tilde{\omega}_R - \tilde{\omega}_m \cdot r(b) > \Delta\omega_{seuil}$)
      iii. l'écart entre la courbe d'embrayage à mettre à jour et le point doit être inférieur à un seuil ($\Delta\theta_{emb}$) donné ($|\tilde{\theta}_{emb} - \theta_{emb\_CC}$ (i)$| < \Delta\theta_{emb}$)

   - des moyens pour, le cas échéant, déterminer si le point correspondant doit être rejeté ou enregistré.

8. Dispositif d'assistance selon l'une des revendications précédentes, **caractérisé en ce qu'**il comprend en outre des moyens pour mettre à jour la courbe d'embrayage en fonction de la fiabilité de l'estimation, ladite fiabilité étant moins importante en début d'utilisation du véhicule, et croissant avec l'usage dudit véhicule.

**Claims**

1. Assistance device for a vehicle comprising a power train connected to the drive wheels by means of a clutch, a bus (4) and a power-assisted parking brake (5), the device comprising sensors which send signals to the bus and means for estimating, by learning from said signals, a clutch curve, said curve linking the position of the clutch pedal and a maximum torque range that can be transmitted by the corresponding clutch, **characterized in that** it also comprises means for phase-aligning the signals delivered in order to reduce the influence of the noise of the sensors associated with said signals.

**2.** Assistance device according to the preceding claim, **characterized in that** said means are filters which introduce delays in the signals.

**3.** Assistance device according to one of the preceding claims, **characterized in that** said means are finite impulse response (FIR) filters.

**4.** Assistance device according to one of the preceding claims, **characterized in that** it also comprises means which introduce constant delays in the signals.

**5.** Assistance device according to one of the preceding claims, **characterized in that** it also comprises means which introduce variable delays in the signals.

**6.** Assistance device according to one of the preceding claims, **characterized in that** it also comprises means for recording, following up and/or down shifts performed on the vehicle, points $(\tilde{\theta}_{clu}, \tilde{ECT}, \tilde{\omega}_R, \tilde{\omega}_m)$, relating to the position of the clutch pedal $(\theta_{clu})$, the speed of rotation of the engine $(\omega_m)$, the speed of rotation of the wheels $(\omega_R)$ and the torque transmitted by the clutch (ECT), in order to estimate the clutch curve by discretization, and means for calculating an average of said points recorded during a determined number of up and/or down shifts $(n_{clu\_curve})$, and do so for each torque range.

**7.** Device according to the preceding claim, **characterized in that** it also comprises:

- means for determining whether a speed is engaged, following a shift in speed,
- means for commanding a measurement of points $(\tilde{\theta}_{clu}, \tilde{ECT}, \tilde{\omega}_R, \tilde{\omega}_m)$,
- means for analysing each point, and determining whether it satisfies the following conditions:

  i. the point belongs to a torque range $(ECT_{Min}(i) < \tilde{ECT} < ECT_{Max}(i))$,
  ii. the slip between the clutch and the inertia flywheel is greater than a slip threshold $(\Delta_{\omega threshold})$ that is given $(\Delta\omega = \tilde{\omega}_R - \tilde{\omega}_m \cdot r(b) > \Delta\omega_{threshold})$
  iii. the deviation between the clutch curve to be updated and the point should be below a threshold $(\Delta\theta_{clu})$ that is given $(|\tilde{\theta}_{clu} - \theta_{clu\_CC}(i)| < \Delta\theta_{clu})$

- means for, where appropriate, determining whether the corresponding point should be rejected or recorded.

**8.** Assistance device according to one of the preceding claims, **characterized in that** it also comprises means for updating the clutch curve according to the reliability of the estimation, said reliability being less high at the start of use of the vehicle, and increasing with the use of said vehicle.

**Patentansprüche**

**1.** Unterstützungsvorrichtung für ein Fahrzeug, ein Antriebsaggregat, das an die Antriebsräder anhand einer Kupplung angeschlossen ist, einen Bus (4) und eine unterstützte Feststellbremse (5) aufweisend, wobei die Vorrichtung Messfühler aufweist, die Signale an den Bus senden, und Mittel, um durch Lernen ausgehend von den Signalen eine Kupplungskurve zu schätzen, wobei die Kurve die Position des Kupplungspedals und einen entsprechenden maximalen Momentbereich, der durch die Kupplung übertragen werden kann, verbindet, **dadurch gekennzeichnet, dass** sie ferner Mittel aufweist, um die gelieferten Signale in Phase zu bringen, um den Einfluss des Rauschens der Messfühler, die mit den Signalen verbunden sind, zu verringern.

**2.** Unterstützungsvorrichtung nach dem vorhergehenden Anspruch, **dadurch gekennzeichnet, dass** die Mittel Filter sind, die Verzögerungen in die Signale einführen.

**3.** Unterstützungsvorrichtung nach einem der vorhergehenden Ansprüche, **dadurch gekennzeichnet, dass** die Mittel Filter mit unendlicher Impulsantwort (FIR) sind.

**4.** Unterstützungsvorrichtung nach einem der vorhergehenden Ansprüche, **dadurch gekennzeichnet, dass** sie ferner Mittel aufweist, die konstante Verzögerungen in die Signale einführen.

**5.** Unterstützungsvorrichtung nach einem der vorhergehenden Ansprüche, **dadurch gekennzeichnet, dass** sie ferner Mittel aufweist, die variable Verzögerungen in die Signale einführen.

6.  Unterstützungsvorrichtung nach einem der vorhergehenden Ansprüche, **dadurch gekennzeichnet, dass** sie ferner Mittel aufweist, um im Anschluss an Aufwärts- und/oder Abwärtsgangwechsel, die an dem Fahrzeug ausgeführt werden, Punkte ($\tilde{\theta}_{Kupp}$, $E\tilde{C}T$, $\tilde{\omega}_R$, $\tilde{\omega}_m$) in Zusammenhang mit der Position des Kupplungspedals ($\theta_{Kupp}$), der Drehzahl des Motors ($\omega_m$), der Drehzahl der Räder ($\omega_R$) und des von der Kupplung (ECT) übertragenen Moments aufzuzeichnen, um die Kupplungskurve durch Diskretisierung zu schätzen, und Mittel, um einen Durchschnitt der aufgezeichneten Punkte während einer bestimmten Anzahl von Aufwärts- und/oder Abwärtsgangwechseln ($n_{Kupp\_Kurve}$) auszuführen, und dies für jeden Momentbereich.

7.  Vorrichtung nach dem vorhergehenden Anspruch, **dadurch gekennzeichnet, dass** sie ferner Folgendes aufweist:

    - Mittel zum Bestimmen, ob im Anschluss an einen Gangwechsel ein Gang eingelegt ist,
    - Mittel zum Steuern einer Messung von Punkten ($\tilde{\omega}_{Kupp}$, $E\tilde{C}T$, $\tilde{\omega}_R$, $\tilde{\omega}_m$),
    - Mittel zum Analysieren jedes Punkts und zum Bestimmen, ob er die folgenden Bedingungen erfüllt:

        i. Der Punkt gehört zu einem Momentbereich ($ECT_{Min}$ (i) $<E\tilde{C}T$, $<ECT_{Max}$ (i)),
        ii. Das Schlupfen zwischen Kupplung und Schwungrad ist größer als ein gegebener ($\Delta\omega=\tilde{\omega}_R-\tilde{\omega}_m$ . r (b) $>\Delta\omega_{Schwelle}$) Schlupfschwellenwert ($\Delta\omega_{Schwelle}$)
        iii. Der Unterschied zwischen der zu aktualisierenden Kupplungskurve und dem Punkt muss kleiner sein als ein gegebener ($|\tilde{\theta}_{Kupp}-\theta_{Kupp\_cc}$ (i) $|<\Delta\theta_{Kupp}$) Schwellenwert ($\Delta\omega_{Kupp}$)

        - Mittel, um gegebenenfalls zu bestimmen, ob der entsprechende Punkt abgelehnt oder aufgezeichnet werden muss.

8.  Unterstützungsvorrichtung nach einem der vorhergehenden Ansprüche, **dadurch gekennzeichnet, dass** sie ferner Mittel aufweist, um die Kupplungskurve in Abhängigkeit von der Zuverlässigkeit der Schätzung zu aktualisieren, wobei die Zuverlässigkeit zu Beginn der Nutzung des Fahrzeugs weniger wichtig ist und im Laufe der Nutzung des Fahrzeugs zunimmt.

**Figure 1**

**Figure 2**

**Figure 3**

## EP 2 176 951 B1

### RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2376990 A
- FR 2828450
- US 20040230391 A